# EUROPEAN PATENT SPECIFICATION

(11) **EP 2 550 192 B1**
(45) Date of publication and mention of the grant of the patent: **10.10.2018**
(21) Application number: 10848585.5
(22) Date of filing: 23.03.2010
(51) Int. Cl.: B62B 7/00

(54) **STROLLER WITH TRAVEL SEAT ATTACHMENT**
KINDERWAGEN MIT REISESITZBEFESTIGUNG
POUSSETTE DOTÉE D'UNE FIXATION DE SIÈGE DE DÉPLACEMENT

(43) Date of publication of application: 30.01.2013
(73) Proprietor: Artsana USA, Inc., Lancaster, Pennsylvania 17601 (US)
(72) Inventor: GREGER, Jeff, Lititz, Pennsylvania 17543 (US); LONGENECKER, Michael, Lancaster, Pennsylvania 17601 (US)
(74) Representative: Ripamonti, Enrico
(86) International application number: PCT/US2010/028223
(87) International publication number: WO 2011/119146

(56) References cited:
- WO-A1-2009/065129
- WO-A1-2009/065129
- DE-U1- 20 311 781
- US-A1- 2009 243 260
- US-A1- 2010 038 886
- US-A1- 2011 156 454

## Description

### FIELD OF INVENTION

The present application relates generally to the field of child strollers. More particularly, the present application relates to a stroller having an improved mechanism for mounting a child travel seat.

### BACKGROUND

Particularly, with infants, it is desirable to design a stroller that can secure a travel seat, such as an infant car seat carrier, so that the travel seat can be mounted between a car seat base and the stroller without having to remove the infant from the travel seat. Examples of strollers that can accommodate such a travel seat are disclosed in U.S. Patent Pub. No. 2005/0242549 or U.S. Patent No 7,597,396.

Strollers designed for mounting travel seats thereto are often larger and heavier than those that do not support travel seats, due to the need for additional structures for securing the travel seat thereon. In some known strollers designed for mounting of travel seats, the travel seat is configured for mounting between the seat back and a child tray that extends in front of the seat. Other known strollers include attachments that must be affixed to the stroller in order to mount a child seat thereto. A need exists for a stroller that allows mounting of a travel seat with a more compact design and does not require structures such as a child tray or removable attachment device to support the travel seat.

WO2009/065129 discloses a travel system according the preamble of claim 1 and is directed to a stroller and infant carrier system, in which the infant carrier rests on a upper end of the seat back to be supported at a higher elevation that is closer to the caregiver pushing the stroller.

DE 203 11 781 is directed to a stroller and child seat combination in which the stroller includes a pair of support frames for receiving a child seat. Because the child seat is connected to upper edges of the support frames, it does not connect to the rear surface of the seatback. In addition, the stroller frame requires two pivoting support frames to support the child seat.

### SUMMARY

The present application describes a stroller having a frame that includes at least one front leg, at least one rear leg, and at least one wheel mounted on each leg. The frame defines front and rear portions and right and left sides. At least one travel seat mount is affixed to the front leg. The stroller also includes a seat having a seat base and a seat back pivotally mounted to the frame. The seat back has a front surface and a rear surface and is rotatable relative to the frame between at least one substantially upright or reclined back support position and a travel seat support position wherein the top portion of the seat back extends towards the front portion of the frame and is capable of supporting a travel seat thereon.

The present application further describes a stroller having a frame including at least one front leg, at least one rear leg, and at least one wheel mounted on each leg. The frame defines front and rear portions and right and left sides. The stroller further includes a seat having a seat base and a seat back pivotally mounted to the frame. The seat back has a front surface and a rear surface, and at least one front travel seat mount is affixed to the rear surface of the seat back. The seat back is rotatable relative to the frame between at least one back support position and a travel seat support position wherein the at least one front travel seat mount is positioned forward of the at least one front leg such that the stroller is capable of supporting a travel seat between the at least one travel seat mount and the at least one front leg.

The present invention is directed to a travel system according to claim 1.

### BRIEF DESCRIPTION OF THE DRAWINGS

The present invention will be better understood when read in conjunction with the following detailed description of the preferred embodiments of the invention and the appended drawings. In the drawings:
FIG. 1 is a perspective view of a preferred embodiment of the stroller with a travel seat mounted thereon.
FIG. 2 is a perspective view of the stroller of FIG. 1, with the seat back positioned in a travel seat support position and a travel seat positioned for mounting on the stroller.
FIG. 3 is a perspective view of the stroller of FIG. 1, with the seat back positioned in a back support position.
FIG. 4 is a top view of the stroller of FIG. 1, with the seat back positioned in the travel seat support position.
FIG. 5 is an enlarged detail of a rear travel seat mount of the stroller of FIG. 1.
FIG. 6 is an enlarged detail showing the front travel seat mounts of the stroller of FIG. 1.
FIG. 7 is an enlarged detail of the stroller of FIG. 1, showing the front and rear travel seat mounts in detail with a travel seat mounted thereon.
FIG. 8 illustrates the right seat adjustment plate of the stroller of FIG. 1.

### DETAILED DESCRIPTION OF THE PREFERRED EMBODIMENT

Certain terminology is used in the following description for convenience only and is not considered limiting. Words such as "front," "back," "top," and "bottom" designate directions in the drawings to which reference is made. This terminology includes the words specifically noted above, derivatives thereof, and words of similar import. Additionally, the terms "a" and "one" are defined as including one or more of the referenced item unless specifically noted. The phrase "at least one of" followed by a list of two or more items, such as "A, B or C," means any individual one of A, B or C, as well as any combination thereof.

As used hereinafter in the description and claims, the term "substantially upright" is defined as vertical, or oriented to form only a small angle with respect to the vertical direction (*i.e.,* less than 20°).

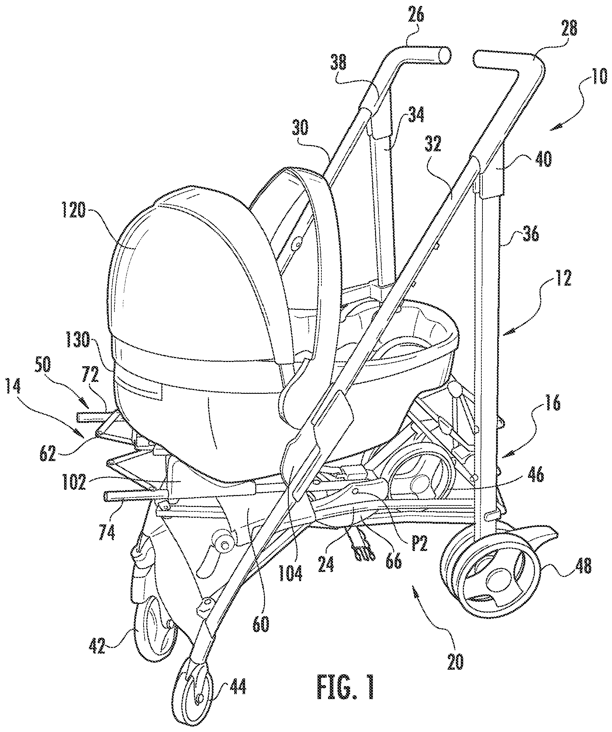

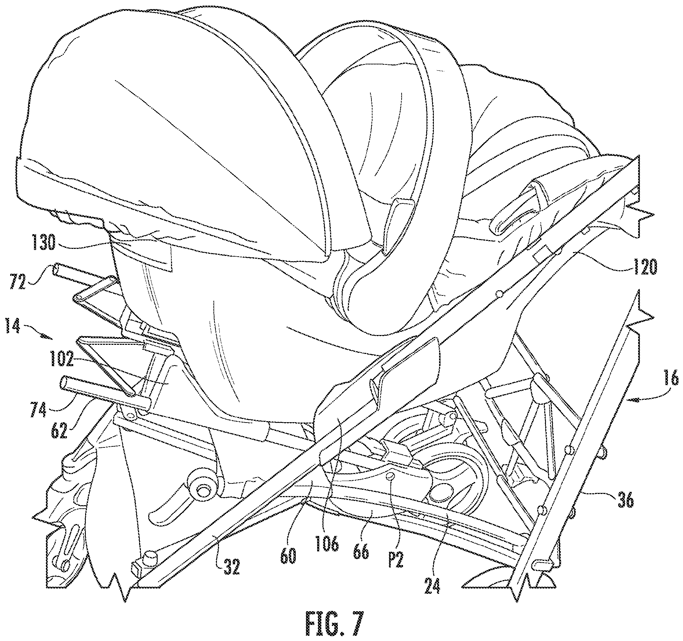

With reference to drawing FIGS. 1-8, wherein like numerals indicate like elements throughout, preferred embodiments of the invention will be described in more detail below.

The stroller 10 of the present invention generally includes a frame 12. The stroller frame 12 preferably has a front end 14, a rear end 16, and left and right sides 18, 20. The frame 12 has left and right front legs 30, 32 and left and right rear legs 34, 36. In the preferred embodiment shown, the rear legs 34, 36 are substantially vertical or perpendicular to the ground and the front legs 30, 32 are arranged at an angle with respect to the rear legs 34, 36. The front legs 30, 32 are connected to the rear legs 34, 36 at respective left and right upper joints 38, 40. A left link 22 extends between the left front leg 30 and the left rear leg 34, and a right link 24 extends between the right front leg 32 and the right rear leg 36.

Handlebars 26, 28 are positioned atop the right and left upper joints 38, 40. In an alternative embodiment, the stroller can have a single handlebar assembly extending between the left and right upper joints 38, 40. In one embodiment the stroller includes a single handle bar assembly with a parent tray, which may have, for example, any of the configurations disclosed in U.S. Patent App. No. 12/541,622.

Left and right front wheel assemblies 42, 44 are mounted at the bottom of the left and right front legs 30, 32, and left and right rear wheel assemblies 46, 48 are mounted at the bottom of the left and right rear legs 34, 36. In the embodiment shown, the front wheel assemblies 42, 44 have a single wheel configuration and rear wheel assemblies 46, 48 have a double wheel configuration, but it should be understood that any of the wheel assemblies 42, 44, 46, 48 can be provided with either a single or double wheel configuration.

As shown in FIGS. 1-4 the stroller 10 of the present invention includes a seat assembly 50 mounted to the frame 12. The seat assembly 50 includes a seat base 60, a seat back 62, and left and right seat adjustment plates 64, 66. The seat adjustment plates 64, 66 are preferably affixed to the left and right links 22, 24 and permit the seat back 62 to pivot with respect to the seat base 60 and lock into a selected pivotal position.

The seat back 62 includes a seat back frame 68 and the seat base includes a seat base frame 70. In the embodiment shown, the seat base frame 70 is formed by portions of links 22, 24 extending past the front legs 30, 32, but could also be formed by separate components. In use, the seat back frame 68 and the seat base frame 70 include fabric covers or panels to enclose or cover the frames 68, 70 or portions thereof and define a seat back front surface 94 and rear surface 95, and a seat base top surface 96 and bottom surface 97. For the sake of simplicity and in order to fully illustrate the working components of the invention, the seat back 62 and seat base 60 are shown without their respective fabric covers, and the front, rear, top and bottom surfaces are designated according to their positioning with respect to the seat back frame 68 and seat base frame 70.

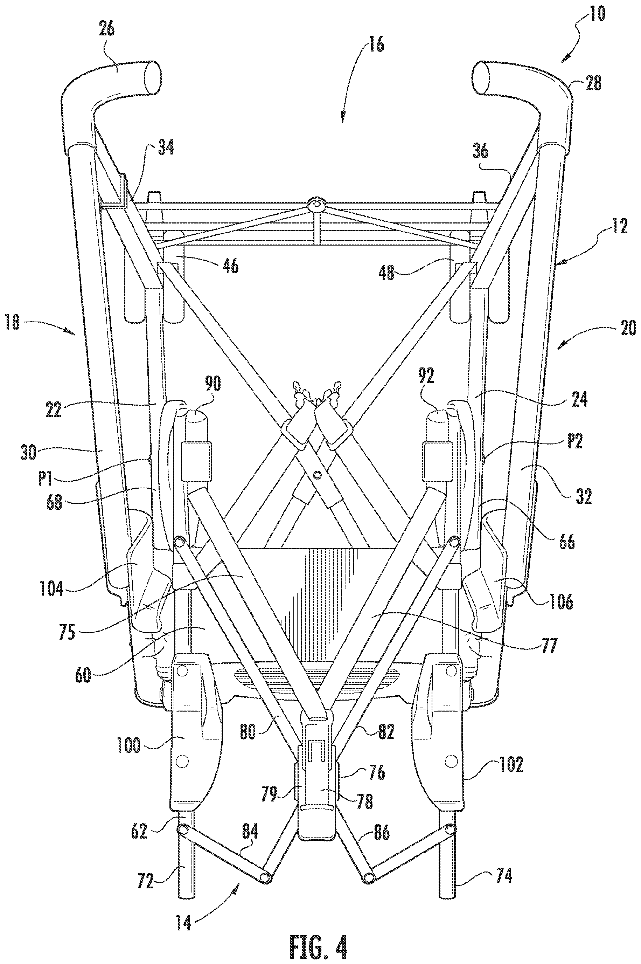

The seat assembly 50 preferably includes a pivoting assembly of the type disclosed in U.S. Patent Pub. No. 2009/0243260. As best shown in FIG. 4, the seat back frame 68 includes left and right seat frame members 72, 74 pivotally affixed to the left and right seat adjustment plates 64, 66 at pivot points P1 and P2. An operator control 76 including a fixed handle guide 79 and operating handle 78 is affixed between the seat frame members 72, 74 by a plurality of connectors 80, 82, 84, 86 extending between the seat frame members 72, 74. The operating handle 78 is slidably affixed within the fixed handle guide 79. Right and left straps 75, 77 connect the operating handle 78 to left and right projections 90, 92 engaged with the right and left seat adjustment plates 64, 66.

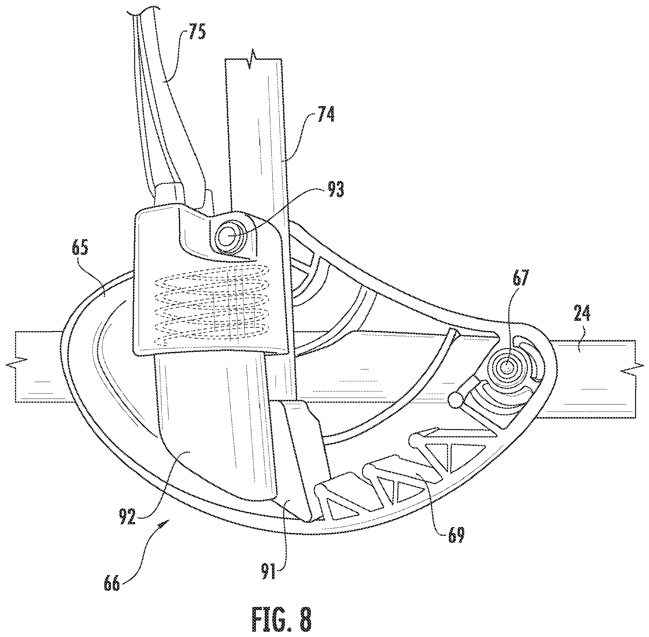

The seat right adjustment plate 66 is shown in Figure 8. While only the right adjustment plate is shown in detail, it should be understood that the left adjustment plate 68 is preferably a mirror image thereof. As shown, adjustment plate 66 is fixed to the right link 24 by a fastener 67 and features a plurality of detents 69. The projection 92 features an engaging surface 91 and is biased by a spring, or other suitable means, toward engagement with one of the plurality of detents 69. Right seat frame member 74 is pivotably mounted to the adjustment plate 66 by a pin 93, allowing the seat back 62 to adjustably pivot to a desired position.

To adjust the position of the seat back 62, the operating handle 78 is pulled upwards or in a direction towards the top of the seat back 62. The upwards movement of operating handle results in tensioning and upward movement of straps 75, 77, which transfer the upward force to projections 90, 92, disengaging the engaging surfaces 91 from the detents 69 of adjustment plates 66, 68. Once disengaged, the seat frame members 72, 74 are free to rotate relative to the adjustment plates 66, 68, allowing the entire seat back 62 to pivot. The release of operating handle 78 allows the projections 90, 92 to reengage the detents 69, setting a desired level of recline of the seat back 62.

While the seat pivoting assembly described above is preferred, it can take on other configurations as well, such as that disclosed in U.S. Patent App. No. 12/541,622.

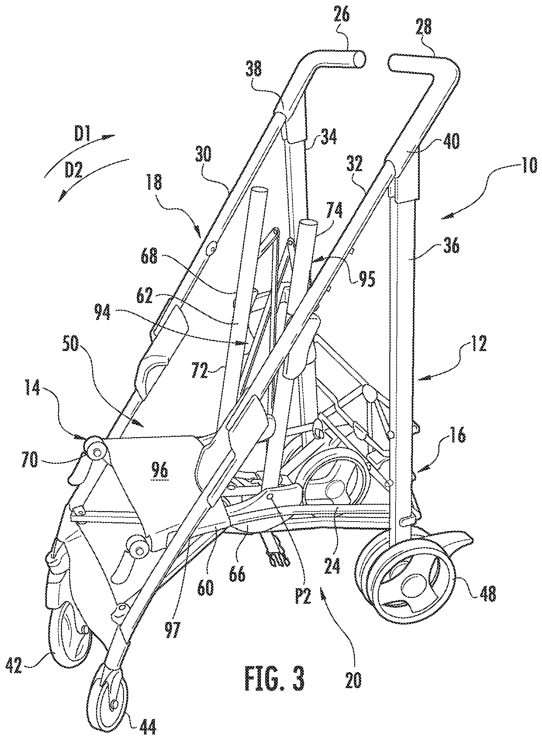

The seat back 62 pivots in directions D1 and D2, shown in FIG. 3, between a travel seat support position (FIG. 1) in which the seat back 62 extends towards the front portion 14 of the frame 12 and is capable of supporting a child seat thereon, and at least one back support position in which the seat back 62 is substantially upright and the seat assembly 50 is suitable for seating a child therein (FIG. 3) or the seat back is in one of a plurality of reclined positions in which the seat back 62 extends towards the rear portion 16 of the frame 12. The projections engage the detents 69 when the seat back 62 is in the upright and reclined positions. When the seat back 62 is in the travel seat support position and seat frame members 72, 74 are pivoted forward, projections 90, 92 abut rear walls 65 of adjustment plates 66, 68.

As shown in FIG. 1, the travel seat 120 is supported between the front legs 30, 32 and the seat frame members 72, 74 when the seat back 62 is in the travel seat support position. The stroller 10 includes at least one travel seat support mount for retaining a travel seat thereon. The stroller 10 is preferably provided with left and right front mounts 100, 102 and left and right rear mounts 104, 106.

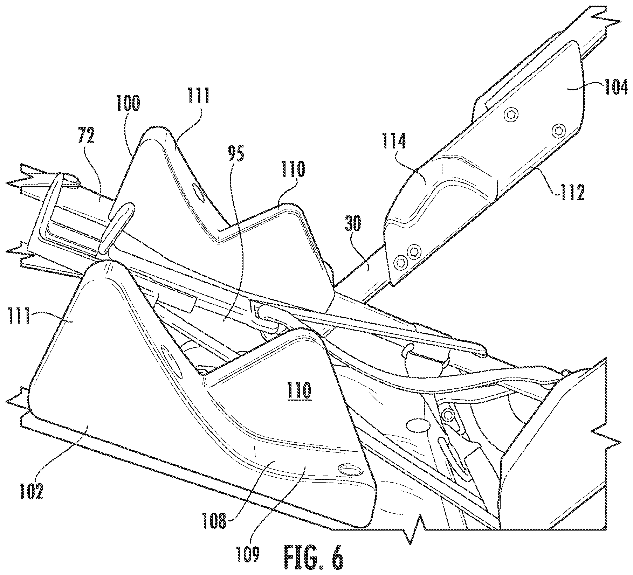

The front mounts 100, 102 are shown in detail in FIG. 6. As shown, the front mounts 100, 102 are affixed on the left and right sides of the seat back. In the embodiment shown, the right front mount 102 is affixed to the right seat frame member 74 and the left front mount 100 is affixed to the left seat frame member 72. Both front mounts 100, 102 extend from the rear surface 95 of the seat back 62. Where a fabric cover is affixed over the seat back 62, it is preferably provided with openings that allow the front mounts 100, 102 to protrude therethrough. The angles of the legs are such that the front mounts 100, 102 are located forward of the rear legs 30, 32 when the seat back 62 is folded into the travel seat support position.

The right front mount 102 will be described in detail, but it should be understood that the left front mount 100 is preferably a mirror image thereof. The right front mount 102 is of a shape complementary to a bottom surface of the travel seat 120. The right front mount 102 includes a surface to support a complementary surface of the travel seat 120. In the embodiment shown, the mount 102 includes an outer supporting wall 108 and an inner projection 110. The supporting wall 108 includes a substantially flat base portion 109 disposed towards the rear 16 of the stroller frame 12 and a retaining portion 111 that curves upwardly from the base portion 109 and is disposed towards the front 14 of the stroller frame 12.

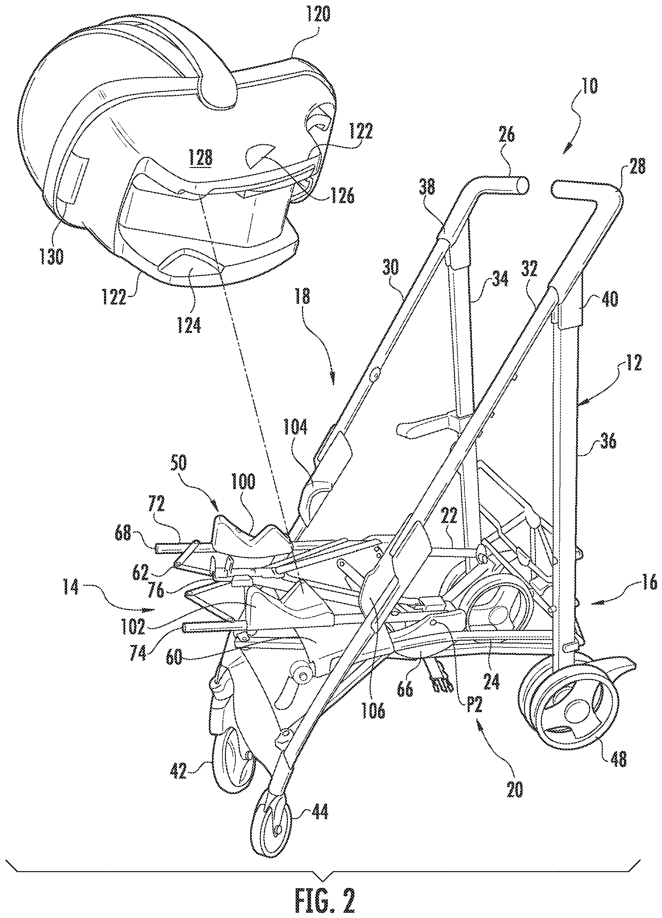

As shown in FIG. 2, the travel seat 120 includes outer ridges 122 on the bottom surface thereof. The ridges 122 rest on the outer supporting walls 108 of the front mounts 100, 102. The ridge 122 forms a convexly curved surface that rests on a concave upper surface formed by the base portion 109 and the retaining portion 111 of the outer supporting wall 108. The travel seat 120 further includes inner grooves 124 disposed between the outer ridges 122. In the embodiment shown, the inner grooves 124 are formed on inner side surfaces of the ridges 122. The inner projections 110 of the mounts 102, 104 are disposed between the outer supporting walls 108 and extend into the grooves 124 of the travel seat 120. The projection 110 shown in FIG. 6 is formed as a wall extending upwards from the outer supporting wall 108 and is of a shape complementary to an inner groove 124 of the travel seat 120. In the embodiment shown, the projection 110 and the inner groove 124 both have substantially triangular shapes, but these elements can take on other shapes as well.

As shown in FIG. 2, the left rear mount 104 is preferably affixed to the left front leg 30 and the right rear mount 106 is preferably affixed to the right front leg 32. The rear mounts 104, 106 are located rearward of the front mounts 100, 102 when the seat back 62 is folded forward into the travel seat support position. The rear mounts 104, 106 could alternatively be affixed to another portion of the frame 12 located rearward of the front mounts 100, 102 when the seat back 62 is in the travel seat supporting position.

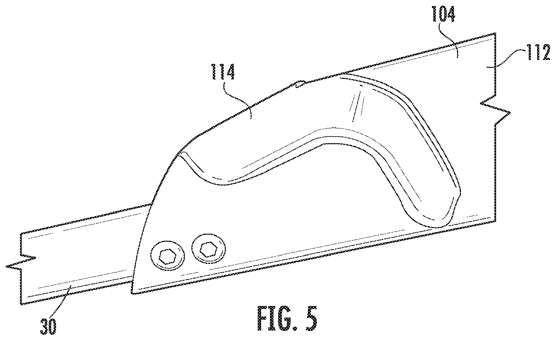

The rear mounts 104, 106 are configured to engage complementary counterstructures of the travel seat 120. The left rear mount 104 is shown in detail in FIG. 5. While the left rear mount 104 is shown in detail, it should be understood that the right rear mount 106 is preferably a mirror image thereof. As shown, the left rear mount 104 includes an outer wall 112 and an inner arch 114. The outer walls 112 of the mounts abut side surfaces 128 of the travel seat 120. The arches 114 of the left and right rear mounts 104, 106 are disposed between the outer walls 112 and are shaped to complement a surface of the travel seat 120. The arch 114 of the mount 104 is configured to engage a retractable flipper 128 on a side surface of the travel seat 120. An actuating handle 130 is provided the travel seat 120 for retracting the flippers 126. When the flipper 128 is extended it fits beneath the arch 114 in the space between outer wall 112 and arch. The retractable flipper assembly of the travel seat 120 and preferably has the configuration described in U.S. Patent No. 7,597,396. Alternatively, or in addition to the flipper assembly, indentations could be formed in the side surface 128 of the travel seat 120 having complementary surfaces configured to sit atop the arches 114.

When the travel seat 120 is mounted on the stroller 10 with the seat assembly 50 in the travel seat support position, the projections 110 of the front travel seat mounts 102, 104 engage the grooves 124 formed in the travel seat 120 and the ridges 122 of the travel seat 120 rest on the outer supporting walls 108. Engagement of projections 110 with the grooves 124 prevent lateral displacement of the travel seat 120 with respect to the stroller, while the retaining portions 111 of the outer supporting walls 108 prevent the travel seat 120 from moving in a direction towards the front 14 of the stroller 10. The outer walls 114 of the rear mounts 104, 106 further prevent lateral displacement of the travel seat 120 with respect to the stroller 10, while engagement of the arches 114 with flippers 126 prevent the travel seat 120 from moving laterally as well as in directions towards both the front 14 and rear 16 of the stroller.

While the stroller is illustrated in the drawings as a single stroller, one of ordinary skill in the art would understand that the present invention can also be used with other stroller configurations including, without limitation, a sit and stand stroller, a double or duo stroller, and a jogging stroller. In addition, the stroller can be a two-dimensional fold stroller, such as that disclosed in U.S. Patent Pub. No. 2005/0242549 or a three dimensional stroller, such as that disclosed in U.S. Patent App. No. 12/059,591.

## Claims

1. A travel system, comprising:
a travel seat (120); and
a stroller (10) comprising:
a frame (12) having at least one front leg (30, 32), at least one rear leg (34, 36), and at least one wheel (42, 44, 46, 48) mounted on each leg (30, 32, 34, 36), the frame (12) defining front and rear portions (14, 16) and right and left sides (18, 20); and
a seat (50) mounted to the frame (12) and having a seat base (60) and a seat back (62) that pivots with respect to the seat base (60), the seat back (62) having a front surface (94) and a rear surface (95); **characterized in that**:
at least one front travel seat mount (100, 102) is affixed to the rear surface (95) of the seat back (62), and at least one rear travel seat mount (104, 106) affixed to the at least one front leg (30, 32); and
**characterized in that** the travel system has a child seating configuration in which the seat back (62) is in a back support position, and a travel seat supporting configuration in which the seat back (62) is pivoted to a position extending towards the front portion (14) of the frame (12) such that the seat back (62) is adjacent to and above the seat base (60) and the travel seat (120) engages the at least one front travel seat mount (100, 102) and the at least one rear travel seat mount (104, 106) such that the travel seat (120) is supported by both the rear surface (95) of the seat back (62) and the at least one front leg (30, 32).

2. The travel system of claim 1, wherein the at least one front leg (30, 32) extends at an upward angle from the front portion (14) to the rear portion (16) of the frame (12).

3. The travel system of claim 2, wherein the frame (12) comprises left and right front legs (30, 32) and the seat back (62) comprises left and right seat back members (72, 74), and the travel seat (102) is positioned between the left and right front legs (30,32) and the left and right seat back members (72, 74), when the travel system is in the travel seat supporting configuration.

4. The travel system of claim 3, wherein the at least one front travel seat mount (100, 102) comprises a left front travel seat mount (100) affixed to the left seat back member (72), and a right front travel seat mount (102) affixed to the right seat back member (74), and
the at least one rear travel seat mount (104, 106) further comprises a left rear travel seat (104) mount affixed to the left front leg (30), and a right rear travel seat mount (106) affixed to the right front leg (32).

5. The travel system of claim 1, wherein the at least one front travel seat mount (100, 102) defines a shape complementary to a surface of the travel seat (120).

6. The travel system of claim 5, wherein the at least front one travel seat mount (100, 102) comprises a left front travel seat mount (100) and a right front travel seat mount (102), each having a supporting wall (108) that supports a bottom surface (122) of the travel seat (120), and a projection (110) that engages a groove (124) formed in the travel seat (120) when the travel system is in the travel seat supporting configuration.

7. The travel system of claim 6, wherein the bottom surface of the travel seat (120) comprises ridges (122) extending along opposite edges thereof that form the bottom surfaces supported by the outer supporting walls (108) and the grooves (124) are formed in side surfaces of the ridges (122).

8. The travel system of claim 6, wherein the supporting walls (108) each comprise a substantially flat base portion (109) disposed towards the rear portion (16) of the frame (12) and an upwardly curved retaining portion (111) disposed towards the front portion (14) of the frame (12) that supports a curved portion of the bottom surface (122) of the travel seat (120) when the travel system is in the travel seat supporting configuration.

9. The travel system of claim 4, wherein the travel seat (120) comprises counterstructures (126) that engage the rear travel seat mounts (104, 106).

10. The travel system of claim 9, wherein the counterstructures (126) are retractable flippers (126) that engage a portion of the rear travel seat mounts (104, 106).

11. The travel system of claim 1, wherein the frame (12) comprises right and left front legs (30, 32) and a right rear travel seat mount (106) is affixed to the right front leg (32) and a left rear travel seat mount (104) is affixed to the left front leg (30), the right and left rear travel seat mounts (104, 106) each comprising an outer wall (112) that abuts a side surface (128) of the travel seat (120) when the travel system is in the travel seat supporting configuration.

12. The travel system of claim 11, wherein the travel seat (120) comprises at least one retractable flipper (126) that engages at least one of the right and left rear travel seat mounts (104, 106).

13. The travel system of claim 1, wherein the rear surface (95) of the seat back (62) is arranged substantially parallel to the seat base (60) to support the travel seat (120) thereon when the seat back (62) is in the travel seat supporting configuration.

## Patentansprüche

1. Reisesystem umfassend:
einen Reisesitz (120); und
einen Kinderwagen (10) umfassend:
einen Rahmen (12) mit mindestens einem Vorderbein (30, 32), mindestens einem Hinterbein (34, 36) und mindestens einem an jedem Bein (30, 32, 34, 36) gelagerten Rad (42, 44, 46, 48), wobei der Rahmen (12) Vorder- und Hinterabschnitte (14, 16) sowie reche und linke Seiten (18, 20) bildet; und
einen an dem Rahmen (12) gelagerten Sitz (50), der eine Sitzfläche (60) und eine relativ zu der Sitzfläche (60) schwenkbare Sitzlehne (62) hat, wobei die Sitzlehne (62) eine Stirnfläche (94) sowie eine Rückfläche (95) hat; **dadurch gekennzeichnet, dass**:
mindestens ein vorderer Reisesitzträger (100, 102) an der Rückfläche (95) der Sitzlehne (62) befestigt ist und mindestens ein hinterer Reisesitzträger (104, 106) an dem mindestens einen Vorderbein (30, 32) befestigt ist; und
**dadurch gekennzeichnet, dass** das Reisesystem eine Kindersitzkonfiguration hat, worin die Sitzlehne (62) in einer Rückenstützenposition ist, und eine Reisesitzstützenkonfiguration hat, worin die Sitzlehne (62) in einer gegen den Vorderabschnitt (14) des Rahmens (12) verlaufenden Stellung geschwenkt wird, so dass die Sitzlehne (62) angrenzend an und oberhalb von der Sitzfläche (60) ist und der Reisesitz (120) in den mindestens einen vorderer Reisesitzträger (100, 102) und in den mindestens einen hinteren Reisesitzträger (104, 106) eingreift, so dass der Reisesitz (120) sowohl durch die Rückfläche (95) der Sitzlehne (62) als auch durch das mindestens eine Vorderbein (30, 32) gestützt wird.

2. Reisesystem nach Anspruch 1, worin das mindestens eine Vorderbein (30, 32) in einem nach oben gerichteten Winkel von dem Vorderabschnitt (14) bis zum Hinterabschnitt (16) des Rahmens (12) verläuft.

3. Reisesystem nach Anspruch 2, worin der Rahmen (12) linke und rechte Vorderbeine (30, 32) umfasst und die Sitzlehne (62) linke und rechte Sitzlehnenelement (72, 74) umfasst und der Reisesitz (102) zwischen den linken und rechten Vorderbeinen (30, 32) und den linken und rechten Sitzlehnenelementen (72, 74) angeordnet ist, wenn das Reisesystem in der Reisesitzstützenkonfiguration.

4. Reisesystem nach Anspruch 3, worin der mindestens eine vordere Reisesitzträger (100, 102) einen an dem linken Sitzlehnenelement (72) befestigten linken vorderen Reisesitzträger (100) und einen an dem rechten Sitzlehnenelement (74) befestigten rechten vorderen Reisesitzträger (102) umfasst, und
der mindestens eine hintere Reisesitzträger (104, 106) einen an dem linken Vorderbein (30) befestigten linken hinteren Reisesitzträger (104) und einen an dem rechten Vorderbein (32) befestigten rechten hinteren Reisesitzträger (106) umfasst.

5. Reisesystem nach Anspruch 1, worin der mindestens eine vordere Reisesitzträger (100, 102) eine zu einer Fläche des Reisesitzes (120) komplementäre Gestalt bildet.

6. Reisesystem nach Anspruch 5, worin der mindestens eine vordere Reisesitzträger (100, 102) einen linken vorderen Reisesitzträger (100) und einen rechten vorderen Reisesitzträger (102) umfasst, wobei jeder davon eine eine Bodenfläche (122) des Reisesitzes (120) stützende Stützwand (108) sowie einen Vorsprung (110), der in eine in dem Reisesitz (120) bei der Reisesitzstützenkonfiguration des Reisesystems bildende Nut (124) eingreift, hat.

7. Reisesystem nach Anspruch 6, worin die Bodenfläche des Reisesitzes (120) entlang gegenüberliegenden Rändern davon laufenden Rippen (122) umfasst, die die durch die äußeren Stützwände (108) gestützten Bodenflächen bilden, und die Nuten (124) an Seitenflächen der Rippen (122) gebildet sind.

8. Reisesystem nach Anspruch 6, worin jede der Stützwände (108) einen gegen den Hinterabschnitt (16) des Rahmens (12) angeordneten, wesentlich flachen Basisabschnitt (109) sowie einen nach oben gekrümmten, gegen den Vorderabschnitt (14) des Rahmens (12) angeordneten Halteabschnitt (111) umfasst, der einen gekrümmten Vorderabschnitt der Bodenfläche (122) des Reisesitzes (120) bei der Reisesitzstützenkonfiguration des Reisesystems stützt.

9. Reisesystem nach Anspruch 4, worin der Reisesitz (120) Gegenstrukturen (126) umfasst, die in die hinteren Reisesitzträger (104, 106) eingreifen.

10. Reisesystem nach Anspruch 9, worin die Gegenstrukturen (126) zurückziehbare Flossen (126) sind, die in einen Abschnitt der hinteren Reisesitzträger (104, 106) eingreifen.

11. Reisesystem nach Anspruch 1, worin der Rahmen (12) linke und rechte Vorderbeine (30, 32) umfasst und ein rechter hinterer Reisesitzträger (106) an dem rechten Vorderbein (32) befestigt ist und ein linker hinterer Reisesitzträger (104) an dem linken Vorderbein (30) befestigt ist, wobei jeder der rechten und linken hinteren Reisesitzträger (104, 106) eine äußere Wand (112) umfasst, die an einer Seitenfläche (128) des Reisesitzes (120) bei der Reisesitzstützenkonfiguration des Reisesystems anliegt.

12. Reisesystem nach Anspruch 11, worin der Reisesitz (120) mindestens eine zurückziehbare Flosse (126) umfasst, die an mindestens einem der rechten und linken hinteren Reisesitzträger (104, 106) eingreift.

13. Reisesystem nach Anspruch 1, worin die Rückfläche (95) der Sitzlehne (62) wesentlich parallel zu der Sitzfläche (60) angeordnet ist, um den Reisesitz (120) daran zu stützen, wenn die Sitzlehne (62) in der Reisesitzstützenkonfiguration ist.

## Revendications

1. Système de déplacement comprenant:
un siège de déplacement (120); et
une poussette (10) comprenant:
un châssis (12) ayant au moins une tige antérieure (30, 32), au moins une tige postérieure (34, 36) et au moins une roue (42, 44, 46, 48) montée sur chaque tige (30, 32, 34, 36), le châssis (12) définissant des portions antérieure et postérieure (14, 16) et des côtés droit et gauche (18, 20); et
un siège (50) monté sur le châssis (12) et ayant une base de siège (60) et un dossier de siège (62) pivotant par rapport à la base de siège (60), le dossier de siège (62) ayant une surface antérieure (94) et une surface postérieure (95); **caractérisé en ce que**:
au moins une fixation de siège de déplacement antérieure (100, 102) est appliquée à la surface postérieure (95) du dossier de siège (62) et au moins une fixation de siège de déplacement postérieure (104, 106) est appliquée à l'au moins une tige antérieure (30, 32); et
**caractérisé en ce que** le système de déplacement a une configuration d'assise d'enfant, dans laquelle le dossier de siège (62) est dans une position de support du dos, et une configuration de support du siège de déplacement, dans laquelle le dossier de siège (62) est pivoté dans une position s'étendant vers la portion antérieure (14) du châssis (12) de sorte que le dossier de siège (62) est adjacent et supérieur à la base de siège (60) et le siège de déplacement (120) enclenche l'au moins une fixation de siège de déplacement antérieure (100, 102) et l'au moins une fixation de siège de déplacement postérieure (104, 106) de sorte que le siège de déplacement (120) est soutenu par la surface postérieure (95) du dossier de siège (62) aussi bien que par l'au moins une tige antérieure (30, 32).

2. Système de déplacement selon la revendication 1, où l'au moins une tige antérieure (30, 32) s'étend avec un angle ascendant à partir de la portion antérieure (14) jusqu'à la portion postérieure (16) du châssis (12).

3. Système de déplacement selon la revendication 2, où le châssis (12) comprend des tiges antérieures gauche et droite (30, 32) et le dossier de siège (62) comprend des éléments de dossier gauche et droit (72, 74) et le siège de déplacement (102) est positionné entre les tiges antérieures gauche et droite (30, 32) et les éléments de dossier gauche et droit (72, 74), lorsque le système de déplacement est dans la configuration de support du siège de déplacement.

4. Système de déplacement selon la revendication 3, où l'au moins une fixation de siège de déplacement antérieure (100, 102) comprend une fixation de siège de déplacement antérieure gauche (100) appliquée à l'élément de dossier gauche (72) et une fixation de siège de déplacement antérieure droite (102) appliquée à l'élément de dossier droit (74), et aussi
l'au moins une fixation de siège de déplacement postérieure (104, 106) comprend aussi une fixation de siège de déplacement postérieure gauche (104) appliquée à la tige antérieure gauche (30) et une fixation de siège de déplacement postérieure droite (106) appliquée à la tige antérieure droite (32).

5. Système de déplacement selon la revendication 1, où l'au moins une fixation de siège de déplacement antérieure (100, 102) définit une forme complémentaire à une surface du siège de déplacement (120).

6. Système de déplacement selon la revendication 5, où l'au moins une fixation de siège de déplacement (100, 102) comprend une fixation de siège de déplacement antérieure gauche (100) et une fixation de siège de déplacement antérieure droite (102), chacune ayant une paroi de support (108) qui soutient une surface de fond (122) du siège de déplacement (120) et une saillie (110) qui enclenche une rainure (124) formée dans le siège de déplacement (120) lorsque le système de déplacement est dans la configuration de support du siège de déplacement.

7. Système de déplacement selon la revendication 6, où la surface de fond du siège de déplacement (120) comprend des nervures (122) s'étendant le long de ses bords opposés qui forment les surfaces de fond soutenues par les parois extérieures de support (108) et les rainures (124) sont formées dans des surfaces latérales des nervures (122).

8. Système de déplacement selon la revendication 6, où les parois de support (108) comprennent chacune une portion de base substantiellement plate (109) agencée vers la portion postérieure (16) du châssis (12) et une portion de retenue courbée vers le haut (111) disposée vers la portion antérieure (14) du châssis (12) qui soutient une portion antérieure courbée de la surface de fond (122) du siège de déplacement (120) lorsque le système de déplacement est dans la configuration de support du siège de déplacement.

9. Système de déplacement selon la revendication 4, où le siège de déplacement (120) comprend des contre-structures (126) qui enclenchent les fixations de siège de déplacement postérieures (104, 106).

10. Système de déplacement selon la revendication 9, où les contre-structures (126) sont des ailerons rétractables (126) qui enclenchent une portion des fixations de siège de déplacement postérieures (104, 106).

11. Système de déplacement selon la revendication 1, où le châssis (12) comprend des tiges antérieures droite et gauche (30, 32) et une fixation de siège de déplacement postérieure droite (106) est appliquée à la tige antérieure droite (32) et une fixation de siège de déplacement postérieure gauche (104) est appliquée à la tige antérieure gauche (30), les fixations de siège de déplacement postérieures droite et gauche (104, 106) comprenant chacune une paroi extérieure (112) qui aboute une surface latérale (128) du siège de déplacement (120) lorsque le système de déplacement est dans la configuration de support du siège de déplacement.

12. Système de déplacement selon la revendication 11, où le siège de déplacement (120) comprend au moins un aileron rétractable (126) qui enclenche au moins une des fixations de siège postérieures droite et gauche (104, 106).

13. Système de déplacement selon la revendication 1, où la surface postérieure (95) du dossier de siège (62) est agencée substantiellement parallèlement à la base de siège (60) pour soutenir le siège de déplacement (120) sur elle lorsque le dossier de siège (62) est dans la configuration de support du siège de déplacement.
